# EUROPEAN PATENT SPECIFICATION

(11) **EP 2 159 636 B1**
(45) Date of publication and mention of the grant of the patent: **08.12.2010**
(21) Application number: 09011006.5
(22) Date of filing: 27.08.2009
(51) Int. Cl.: G03B 21/14, G08B 13/14, H04N 5/74

(54) **Projection display device with theft protection**
Projektionsanzeigevorrichtung mit Diebstahlsicherung
Dispositif d'affichage de projection avec un dispositif antivol

(30) Priority: 28.08.2008 JP 2008219975
(43) Date of publication of application: 03.03.2010
(73) Proprietor: Sanyo Electric Co., Ltd., Moriguchi-shi Osaka 570-8677 (JP)
(72) Inventor: Oku, Masaki, Moriguchi-shi Osaka 570-8677 (JP)
(74) Representative: Glawe, Delfs, Moll

(56) References cited:
- WO-A-90/12427
- WO-A-98/36483
- US-A- 5 747 189
- US-A1- 2006 164 242
- US-A1- 2008 088 446

## Description

### BACKGROUND OF THE INVENTION

### 1. Field of the Invention

The present invention relates to a projection display device for enlarging and projecting light modulated by an imager on a projection plane, such as a liquid crystal panel.

### 2. Description of the Related Art

At present, there have been commercialized and widely spread a projection display device (hereinafter, referred to as "projector") that enlarge and project an image displayed on a liquid crystal panel or the like onto a projection plane (such as a screen). This kind of projector is portable and comparatively expensive. For this reason, a structure for preventing a theft is needed for a projector.

A password, a PC card, etc. may be used as a method of preventing a theft of a projector. In this case, a function for preventing a theft with a password, a PC card, or the like may be provided to a projector. In addition, an antitheft device may be attached to a projector. For example, a vibration sensor is installed in a projector. The vibration sensor detects whether the projector is being carried. An alarm device operates according to this detection result.

Thus, to operate an alarm, a secondary battery (rechargeable battery) is built in the projector. When the projector is not connected to an AC power supply (external power supply), electric power is supplied to the alarm device from the rechargeable battery. At the time when a theft occurs, the electric power is supplied to the alarm device from the rechargeable battery, and an alarm sound is outputted. Thereby, an occurrence of a theft is reported.

However, if a condition that the projector is not connected to the AC power supply (external power supply) continues for a long time, the electric power of the rechargeable battery will be consumed by the alarm device in a waiting state. Thereby, the rechargeable battery may fall into an overdischarging state. On the other hand, there is a range of voltage required to operate an alarm device normally. The alarm device does not operate properly when a level of the voltage lower than this voltage range is supplied. Therefore, if the electric power is further supplied to the alarm device after the voltage supplied from the rechargeable battery is less than the lower limit of this voltage range, the electric power of the rechargeable battery will result in being unnecessarily consumed by the alarm device.

If the rechargeable battery becomes the overdischarging state because of this wasteful consumption, the rechargeable battery will deteriorate, and in the worst case, it will be in the condition (unchargeable condition) that the rechargeable battery cannot be charged. Then, the alarm device will no longer be operable, and when a theft occurs, the alarm sound will not be outputted.

US 2006/164242 A1 discloses a projection display device according to the preamble of claim 1.

A circuit arrangement for preventing deep discharge of a battery is known from WO 98/36483 A.

WO 90/12427 A discloses a battery cutoff circuit activated at a voltage threshold value where the battery is still capable of providing energy for an emergency use wherein this cutoff circuit concerns an accumulating battery for use in a car.

### SUMMARY OF THE INVENTION

An object of the present invention is to perform an alarm function of a projection display device properly by preventing a rechargeable battery from being in an overdischarging state effectively.

This object is achieved by a projection display device as claimed in claim 1; the dependent claims are related to further developments of the invention.

A projection display device according to a main aspect of the present invention includes a power supply part which supplies electric power from an external power supply, a charging part which charges a rechargeable battery with the power supply part, an alarm part for outputting an alarm sound, a switching part which supplies either the electric power from the power supply part or an electric power from the rechargeable battery to the alarm part, and a cutoff part which cuts off a supply of the electric power from the rechargeable battery to the alarm part when a charge quantity of the rechargeable battery falls under a threshold value.

According to the projection display device in the main aspect of the present invention, if the charge quantity of the rechargeable battery falls under the threshold value, the electric supply from the rechargeable battery to the alarm part will be cut off. Therefore, it can be suppressed that the electric power of the rechargeable battery to be unnecessarily consumed by the alarm part, and the overdischarging state of the rechargeable battery can be suppressed effectively.

In the projection display device according to the main aspect of the present invention, the cutoff part may be arranged between the rechargeable battery and the switching part. According to this structure, the discharge of the rechargeable battery by peripheral circuits can also be suppressed as well as the discharge by the alarm part, and the wasteful discharge of the rechargeable battery can be suppressed more effectively.

Moreover, in the projection display device according to the main aspect of the present invention, the threshold value may be set at a lower limit value of a voltage range where the alarm part can operate normally. According to this structure, the wasteful discharge of the rechargeable battery by the alarm part can be suppressed most appropriately.

In addition, the threshold value may be set at a voltage value which is determined beforehand to suspend discharge of the rechargeable battery. According to this structure, before the rechargeable battery falls into the overdischarging state, discharge of the rechargeable battery can be suspended.

Moreover, in the projection display device according to the main aspect of the present invention, the alarm part may have a distinguishpart for distinguishing whether the projection display device is moved, and output the alarm sound when an electric power from the rechargeable battery is supplied to the alarm part by the switching part, and when the distinguish part determines that the projection display device is moved. According to this structure, an occurrence of a theft can be reported effectively.

### BRIEF DESCRIPTION OF THE DRAWINGS

FIG. 1 is a diagram (perspective view) showing an external arrangement of a projector in an embodiment of the present invention;
FIGs. 2A and 2B are diagrams explaining an adapter and an installation method of the adapter in the embodiment.
FIGs. 3A and 3B are diagrams showing a state in use of the projector in the embodiment.
FIG. 4 is a diagram showing the state in use of the projector in the embodiment.
FIG. 5 is a diagram (perspective view) showing an internal arrangement of the projector in the embodiment.
FIG. 6 is a diagram (top plan view) showing the internal arrangement of the projector in the embodiment.
FIG. 7 is a diagram showing a circuit arrangement of the projector in the embodiment.
FIGs. 8A and 8B are diagrams showing the circuit arrangement of a cutoff circuit and switching circuit in the embodiment.
FIG. 9 is a diagram showing a control processing of a buzzer circuit in the embodiment.
FIG. 10 is a diagram showing a supply operation of a direct-current voltage (hereinafter, referred to as "DC voltage") to an alarm microcomputer and an alarm board in the embodiment.
FIG. 11 is a diagram showing a modification example of the circuit arrangement of the projector in the embodiment.
FIG. 12 is a diagram showing another modification example of the circuit arrangement of the projector in the embodiment.

It should be understood that the drawings are only for purpose of description, and do not limit the scope of the present invention.

### DESCRIPTION OF THE PREFERRED EMBODIMENTS

A structure of a projector in the embodiments will be explained below with reference to the drawings.

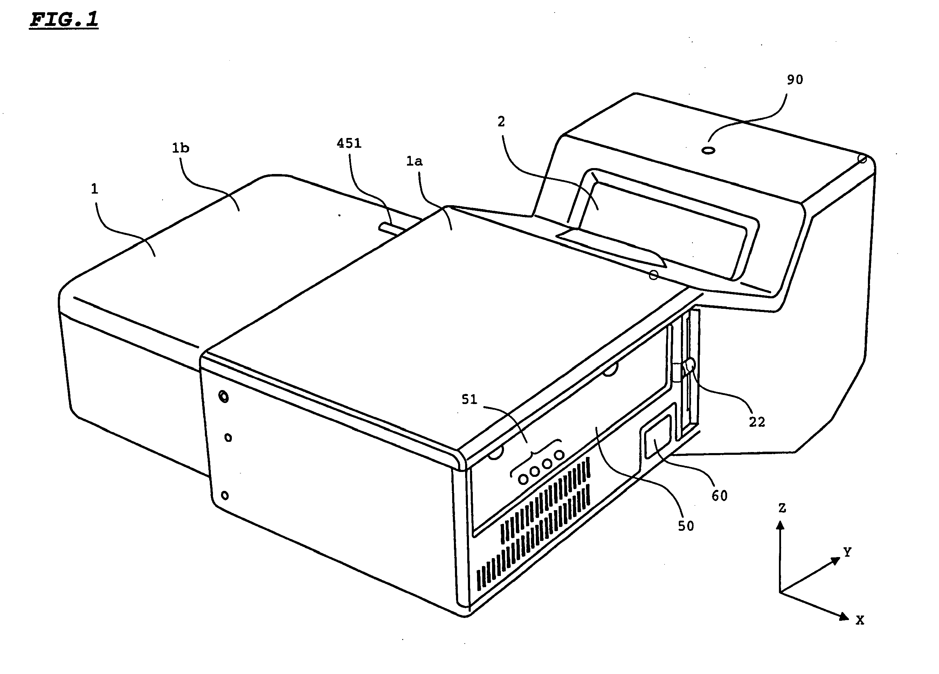

FIG 1 is a perspective view showing an external arrangement of the projector.

An external cabinet 1 of the projector consists of a first cabinet 1a and second cabinet 1b which laterally protrudes from the first cabinet 1a. A window 2 for projecting light modulated by image signals is arranged on the front-face side of the first cabinet 1a. Near the window 2, a remote controller receiving part 90 faces outside. From the right lateral of the first cabinet 1a, terminals of an AV terminal part 50 and AC inlet 60 face outside. A knob 22 for performing focus adjustment of a projection image is arranged on the right lateral of the first cabinet 1a. The knob 22 may be moved in a Z axis direction.

Operation buttons part 51 for inputting the alarm operation is included in the AV terminal part 50. Moreover, from the second cabinet 1b, LED 451 (this will be mentioned later) for reporting a fall of a battery residual quantity faces outside.

An adapter is used when placing the projector on a placing surface such as a floor.

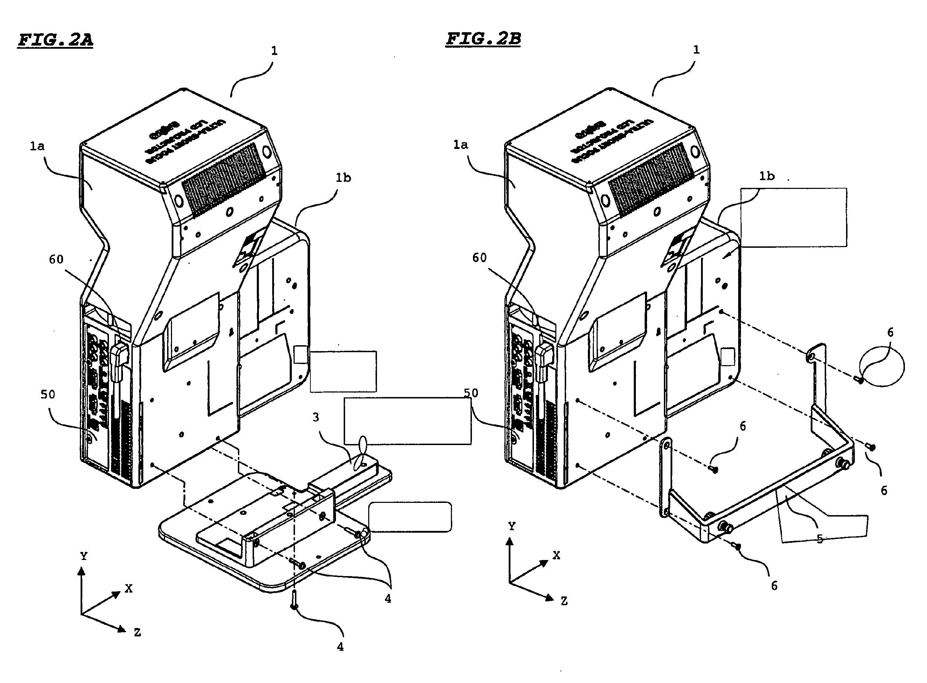

FIGs. 2A and 2B are diagrams explaining a structure and a placing method of the adapter. FIG. 2A shows a case where a stand 3 is used as the adapter, and FIG. 2B shows a case where an arm member 5 is used as the adapter.

Referring to FIG. 2A, the stand 3 is mounted onto the bases of the first cabinet 1a and the second cabinet 1b. That is, with the bases of the first cabinet 1a and the second cabinet 1b placed on the top face of the stand 3, the stand 3 is fixed to the first cabinet 1a with screws 4.

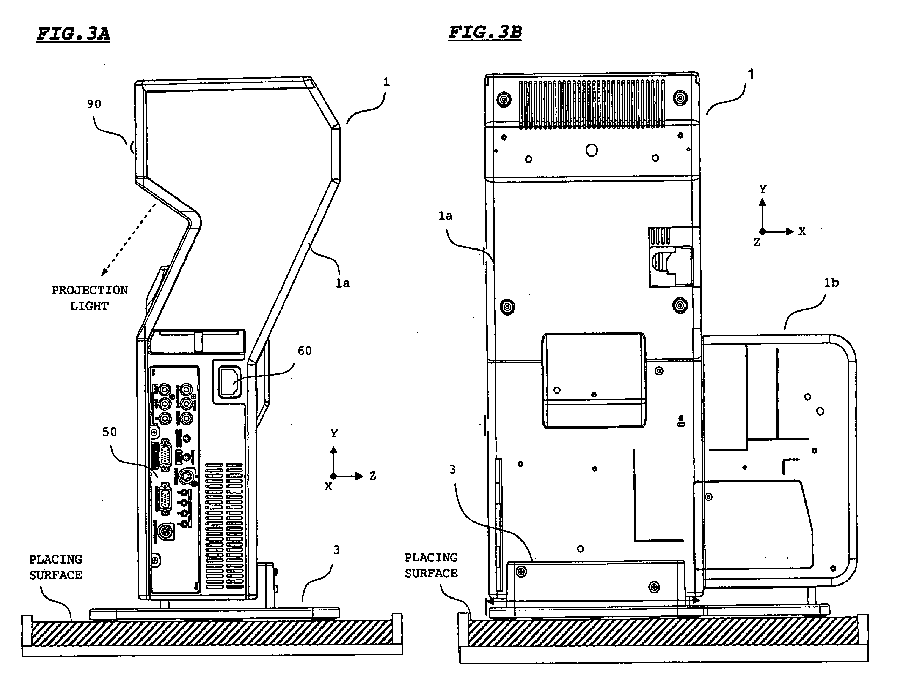

FIGs. 3A and 3B are a right side view and rear side view, respectively, showing conditions of a use of the projector when it is equipped with the stand 3. In this case, light modulated by image signals is projected on the face (placing surface) where the projector is placed.

Referring to FIG. 2B, an arm member 5 is equipped on the rear side of the first cabinet 1a and the second cabinet 1b. That is, screw holes of the rear side of the first cabinet 1a and the second cabinet 1b and holes of the arm member 5 are fit together, and the arm member 5 is fixed to the first cabinet 1a with screws 6.

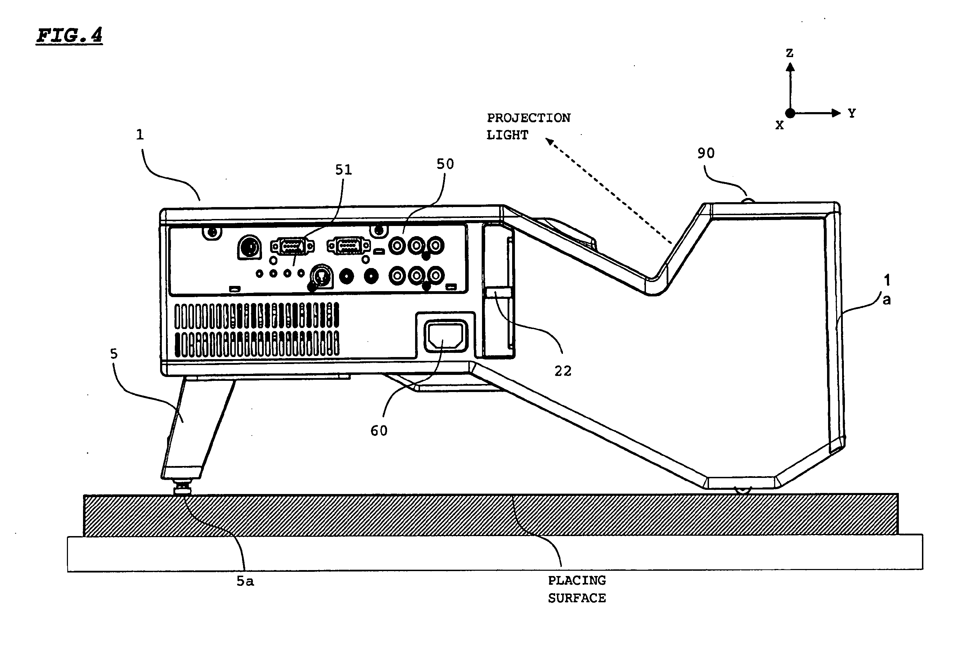

FIG. 4 is a right side view showing a condition of a use of the projector when it is equipped with the arm member 5. In this case, the light modulated by the image signals is projected on different a face (a wall, a screen, etc.) from the face (placing surface) where the projector is placed. It is noted that, when an adjusting screw 5a arranged on the arm member 5 is turned, a projection direction of the light is fine-adjusted and a projection condition of an image over a projection surface will be adjusted.

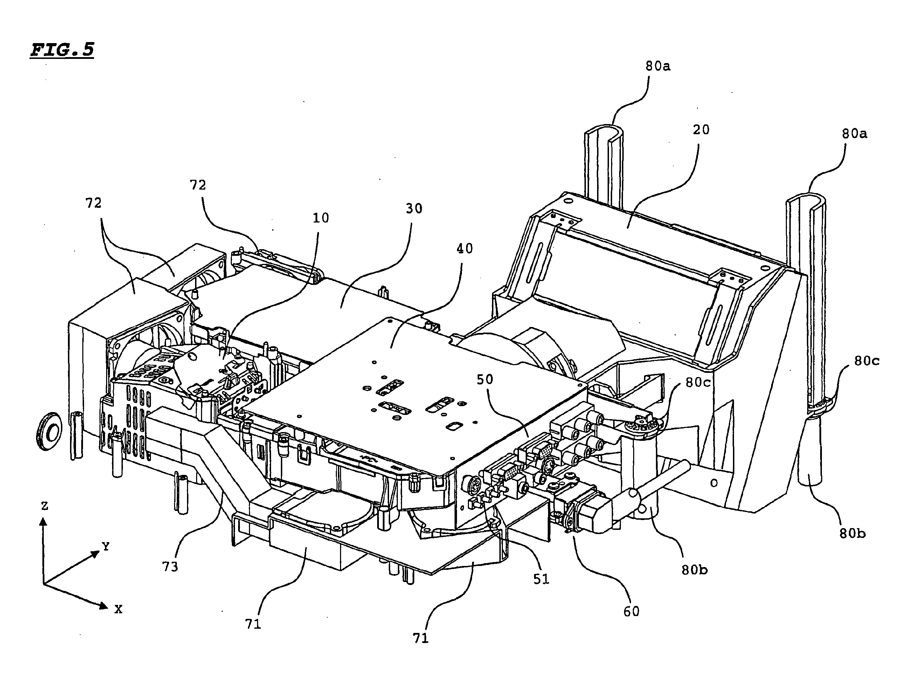

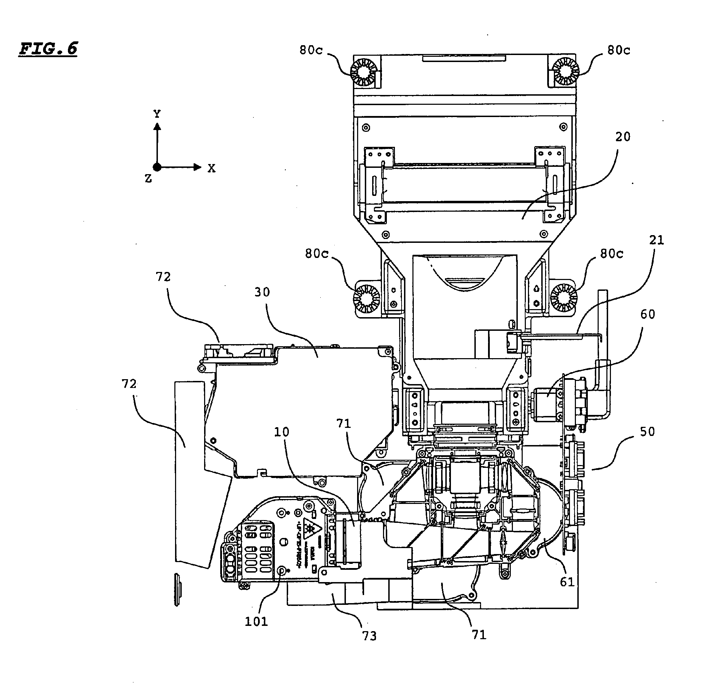

FIGs. 5 and 6 are the external perspective view and top plan view showing the arrangement of the projector in the condition where the external cabinet 1 is being omitted. It is noted that, FIG. 6 shows the condition where a main substrate 40 is removed.

Referring to FIGs. 5 and 6, the projector includes an optical engine 10, a projection optical system 20, a power supply unit 30, the main substrate 40, the AV terminal part 50, and the AC inlet 60. It is noted that, 80a are bosses from a front-face side cabinet, 80b are bosses from a rear-face side cabinet and 80c are bushes for vibration absorption.

The projection optical system 20 is equipped in the cabinet with its brim sandwiched between the bosses 80a and 80b through the bushes 80c. Thus, the projection optical system 20 is supported through the bushes 80c for vibration absorption. For this reason, it is difficult for an impact from the external cabinet 1 to reach the projection optical system 20. Moreover, the projection optical system 20 is supported by the bosses 80a from the front-face side cabinet and the bosses 80b from the rear-face side cabinet through the bushes 80c for vibration absorption. This increases the supporting strength to the projection optical system 20.

From a projection lens part of the projection optical system 20, a lever 21 for focus adjustment protrudes in the manner shown in FIG. 6. A focus of a projection image is adjusted by rotating this lever 21 on the X-Z plane. The knob 22 for the above-mentioned focus adjustment is equipped at the tip of the focusing lever 21. This knob 22 faces outside from the right lateral of the first cabinet 1a (see FIG. 4).

The optical engine 10 separates white light from a light source 101 into light of a blue wavelength band, green wavelength band and red wavelength band. The separated light of each wavelength band is modulated by an imager (liquid crystal panel) . The modulated light of each wavelength band is combined by a dichroic prism. The combined light is emitted towards the projection optical system 20. As shown in FIG. 6, the light source 101 is arranged to emit the light in an X axis direction, and the projection optical system 20 is arranged to have its optical axis be in a Y axis direction.

The power supply unit 30 supplies electric power to the light source 101 and the main substrate 40. AC voltage is inputted into the power supply unit 30 through the AC inlet 60. The main substrate 40 is a circuit for driving and controlling the projector. As shown in FIG. 5, a circuit substrate holding the main substrate 40 is arranged to cover a part of the optical engine 10. Moreover, AV (Audio Visual) signal is inputted into the main substrate 40 through the AV terminal part 50. Furthermore, the operation buttons part 51 for inputting the alarm operation is included in the AV terminal part 50, as described above.

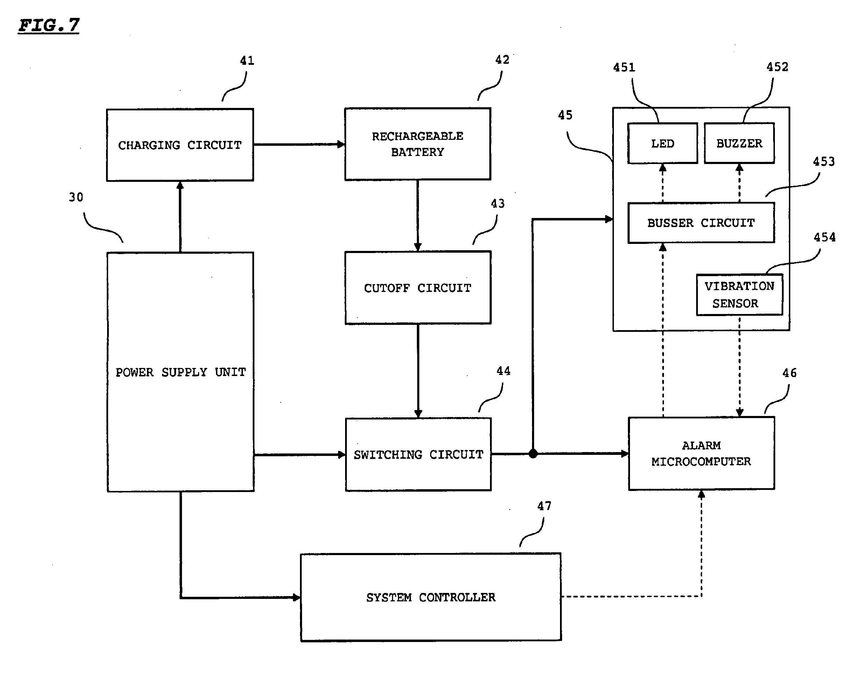

It is noted that an alarm circuit is arranged on the main substrate 40 in this embodiment. Details of the alarm circuit and its peripheral circuit will be explained referring to FIGs. 7 to 9 later.

Three suction fans 71 are arranged on the rear-face side of the optical engine 10. Air inhaled with these suction fans 71 is exhausted with exhaust fans 72 arranged on the left lateral side of the optical engine 10 and an exhaust fan 72 arranged on the rear side. By arranging the suction fans 71 and the exhaust fans 72 as such, the air inhaled with the suction fan 71 flows through the optical system of the optical engine 10, the light source 101 and the power supply unit 30. Moreover, the inhaled air is led to the side face of the light source 101 through a duct 73, and flows toward the exhaust fans 72 from the side face of the light source 101. The heat generated in these members is removed by this flow of the air.

Next, referring to FIG. 7, the structure of the alarm circuit and its peripheral circuit arranged on the above-mentioned main substrate 40 is explained. It is noted that the power supply unit 30 is illustrated together in this drawing for the sake of convenience.

The power supply unit 30 generates a DC voltage by rectifying the AC voltage inputted through the AC inlet 60, and supplies the generated DC voltage to a charging circuit 41, a cutoff circuit 43 and a system controller 47. The power supply unit 30 corresponds to the "power supply part" of the present invention.

The charging circuit 41 charges a rechargeable battery 42 using the DC voltage supplied from the power supply unit 30. The rechargeable battery 42 is a nickel hydride battery, and supplies the charged DC voltage to the cutoff circuit 43. The charging circuit 41 corresponds to the "charging part" of the present invention.

The cutoff circuit 43 comprises a reset IC. When the DC voltage supplied from the rechargeable battery 42 is less than a threshold value Vs1, the cutoff circuit 43 cuts off the supply of the DC voltage from the rechargeable battery 42 to the switching circuit 44. The cutoff circuit 43 corresponds to the "cutoff part" of the present invention.

The threshold value Vs1 is, for example, set at a lower limit value of a range of the voltage where each circuit on the alarm board 45 and the alarmmicrocomputer 46 can operate normally. Thus, when the threshold value Vs1 is set this way, it can be prohibited that the consumption of the voltage from the rechargeable battery by being supplied to the alarm board 45 and the alarmmicrocomputer 46 even though they cannot be operated. Therefore, wasteful discharge of the rechargeable battery with the alarm board 4 5 and the alarm microcomputer 46 can be suppressed most suitably.

In addition, the threshold value Vs1 may be set at the recommended voltage value which is a predetermined voltage value below which discharge of the rechargeable battery 42 should be suspended, or the threshold value Vs1 may be set in consideration of both the above-mentioned lower limit value and the recommended voltage value. Thus, setting the threshold value vs1 in this manner stops the discharge of the rechargeable battery 42 before the rechargeable battery 42 turns into an overdischarge state.

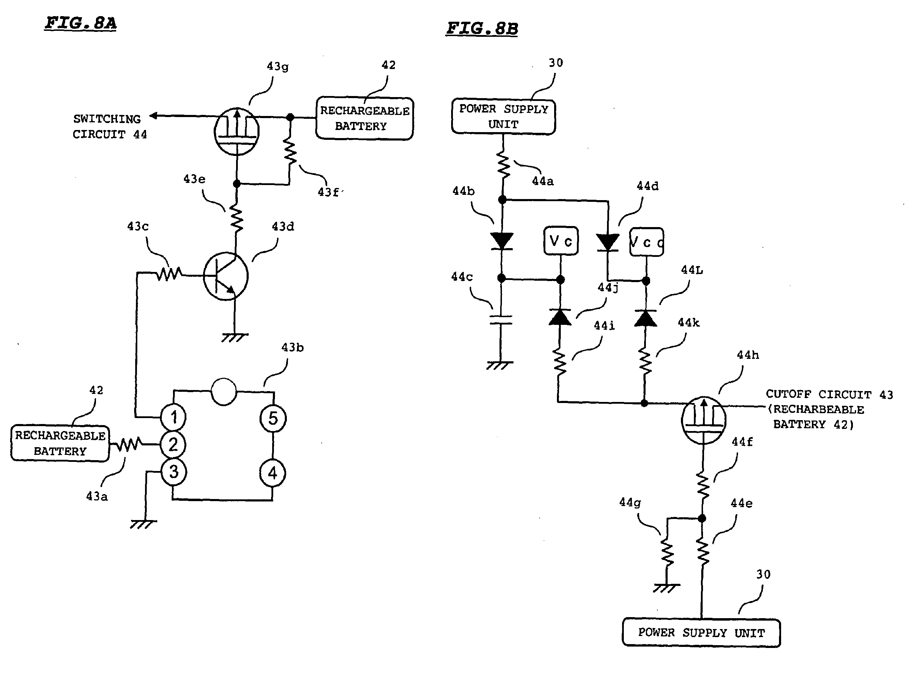

FIG. 8A is a diagram showing the structure of the cutoff circuit 43.

The DC voltage from the rechargeable battery 42 is inputted into the reset IC 43b through a resistor 43a. The reset IC 43b sets up the output signal from a first terminal at high-level when the DC voltage supplied from the rechargeable battery 42 is the threshold values Vs1 or more. This signal is supplied to a base of a transistor 43d through the resistor 43c. Thereby, the transistor 43d is turned on. When the transistor 43d is turned on in this way, current flows through the resistor 43f, 43e and the transistor 43d from the rechargeable battery 42, and a potential difference will arise between the source and gate of a FET 43g. Thereby, the FET 43g is turned on, and the DC voltage from the rechargeable battery 42 is supplied to the switching circuit 44.

On the other hand, when the DC voltage supplied from the rechargeable battery 42 is less than the threshold value Vs1, the reset IC 43b brings down the output signal from the first terminal to a low level. Thereby the transistor 43d is turned off, and the current does not flow through the resistor 43f, 43e and transistor 43d from the rechargeable battery 42. In this case, no potential difference arises between the source and gate of the FET 43g, and, for this reason, the FET 43g is turned off. In this way, the DC voltage from the rechargeable battery 42 is no longer supplied to the switching circuit 44.

Returning to FIG. 7, the switching circuit 44 supplies either the DC voltage supplied from the power supply unit 30 or the DC voltage supplied from the rechargeable battery 42 through the cutoff circuit 43 to the alarm board 45 and the alarm microcomputer 46. The switching circuit 44 corresponds to the "switching part" of the present invention.

FIG. 8B is a diagram showing the structure of the switching circuit 44.

The DC voltage from the power supply unit 30 is supplied to a diode 44b, capacitor 44c and diode 44d through a resistor 44a. At this time, simultaneously, the DC voltage from the power supply unit 30 is supplied to the gate of a FET 44h through resisters 44e-44f, and, thereby, the FET 44h is turned OFF. It is noted that an FET which will turn into an OFF state when a high-level signal is supplied to the gate is used for the FET 44h.

Thus, when the FET 44h is turned off, the DC voltage from the cutoff circuit 43, i.e., the DC voltage from the rechargeable battery 42 will be cut off by the FET 44h. Therefore, in this case, the DC voltage supplied through the diodes 44b and 44d from the power supply unit 30 is considered to be the DC voltage (Vcc, Vc) supplied to the alarm board 45 and the alarm microcomputer 46.

On the other hand, when a connection of an outlet (external power supply) to the AC inlet 60 is removed and the DC voltage is no longer supplied to the switching circuit 44 from the power supply unit 30, the gate of the FET 44h will be connected to ground and the FET 44h will be switched to an ON state. Thereby, the DC voltage from the cutoff circuit 43, i.e., the DC voltage from the rechargeable battery 42 is conducted through the FET 44h and supplied to diodes 44j and 44L through the resistors 44i and 44k. Therefore, in this case, the DC voltage supplied from the cutoff circuit 43, i.e., the DC voltage from the rechargeable battery 42 is considered to be the DC voltage (Vcc, Vc) supplied to the alarm board 45 and the alarm microcomputer 46.

Thus, the switching circuit 44 supplies the alarm board 45 and the alarm microcomputer 46 with the DC voltage from the power supply unit 30 when the DC voltage is supplied therefrom, while supplying the DC voltage from the rechargeable battery 42 through the cutoff circuit 43 when no DC voltage is supplied from the power supply unit 30.

Returning to FIG. 7, the alarm board 45 includes an LED (Light Emitting Diode) 451, a buzzer 452, a buzzer circuit 453, and a vibration sensor 454. Among these, the buzzer circuit 453 drives the LED 451 and the buzzer 452 according to a control signal from the alarm microcomputer 46. The vibration sensor 454 outputs a detection result (vibration signal) to the alarm microcomputer 46.

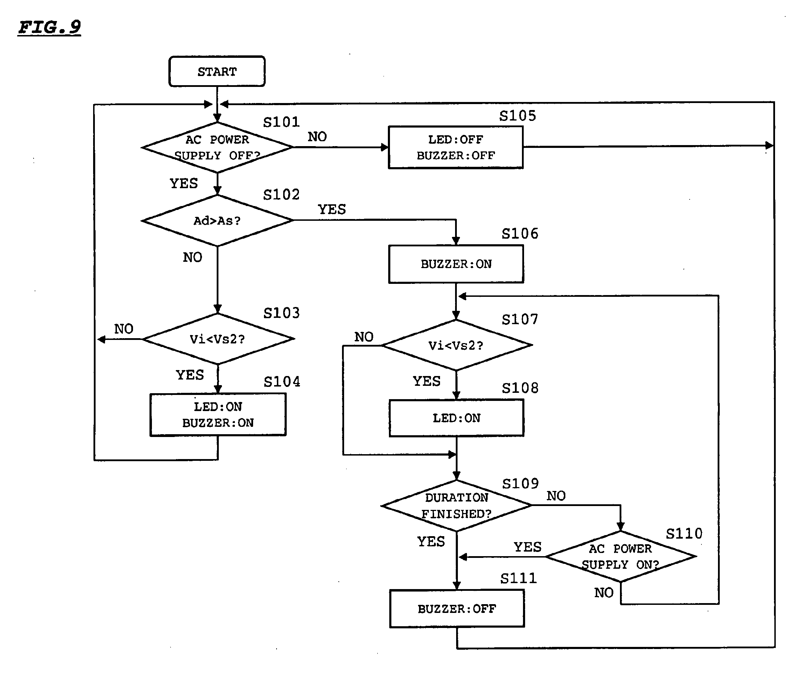

The alarm microcomputer 46 controls and drives the buzzer circuit 453 by referring to the vibration signal inputted from the vibration sensor 454 and the DC voltage supplied from the switching circuit 44. The control processing in the alarm microcomputer 46 is explained by referring to FIG. 9 later. The alarm board 45 and the alarm microcomputer 46 correspond to the "alarm part" of the present invention.

The system controller 47 supplies parameter values regarding a sound volume of an alarm (buzzer), a detection sensitivity of the vibration, a duration of an alarm output, etc. to the alarm microcomputer 46. Such parameter values are suitably changed by a user's choice of alarm setting items in a user menu. Moreover, the system controller 47 supplies the alarm microcomputer 46 with a signal (hereinafter, referred to as "AC status signal") which shows whether the electric power is supplied from the power supply unit 30, i.e., whether the AC inlet 60 is connected to the outlet (external power supply). The alarmmicrocomputer 46 controls and drives the buzzer circuit 453 based on the parameter values supplied from the system controller 47 and on the AC status signal.

Next, referring to FIG. 9, the control processing in the alarm microcomputer 46 is explained. It is noted that a process flow shown in this diagram is performed when an alarm mode is set by the user through the operation buttons part 51.

The alarm microcomputer 46 distinguishes whether the DC voltage is supplied from the power supply unit 30 based on the AC status signal supplied from the system controller 47 (S101). When the DC voltage is not supplied from the power supply unit 30 (S101: YES), the alarm microcomputer 46 judges that the currently supplied DC voltage is from the rechargeable battery 42, and then judges whether the vibration degree Ad detected by the vibration sensor 454 exceeds the threshold value As or not (S102).

If the judgment in S102 is not Ad>As (S102: NO), the alarm microcomputer 46 will judge whether the DC voltage Vi from the rechargeable battery 42 supplied from the switching circuit 44 is less than a threshold value Vs2 (Vs2>Vsl) (S103). At this point, in the case of Vi<Vs2 (S103: YES), the alarmmicrocomputer 46 judges that the DC voltage Vi from the rechargeable battery 42 supplied through the switching circuit 44 fell, and outputs a control signal for driving the LED 451 and the buzzer 452 at regular intervals to the buzzer circuit 453 (S104). Thereby, the LED 451 lights up at regular intervals, and the alarm sound is outputted at regular intervals. This information output enables the user to know the fall of the charge residue of the rechargeable battery 42.

In this way, when the AC inlet 60 is connected to an outlet and the DC voltage from the power supply unit 30 starts to be supplied while the LED 451 lights up and the alarm sound is outputted, the AC status signal showing this status is supplied to the alarm microcomputer 46 from a system controller 47. In response to this AC status signal (S101: NO), the alarm microcomputer 46 makes the buzzer circuit 453 stop driving the LED 451 and the buzzer 452 (S105).

On the other hand, when the judgment in S102 is Ad>As (S102:YES), the alarmmicrocomputer 46 judges that the projector body is moved (vibrated greatly) and outputs a control signal for driving the buzzer 452 to the buzzer circuit 453 (S106). Thereby, the alarm sound is outputted from the projector.

It is noted that the detection sensitivity of detecting the movement of the projector is decided by the threshold value As. Here, the threshold value As is set based on a set value of the detection sensitivity of the vibration among the parameter values supplied from the above-mentioned system controller 47. Moreover, the sound volume and output duration of the alarm sound in S106 are also set based on set values of the parameters supplied from the above-mentioned system controller 47.

Once the buzzer 452 is driven in S106, the alarm microcomputer 46 continues outputting the alarm sound until either elapse of the output duration set by the system controller 47 (S109: YES) or receipt of the AC status signal which shows that the AC inlet 60 is connected to the outlet from a system controller 47 (S110:YES). It is noted that even during output of the alarm, the alarm microcomputer 46 continuously monitors whether the DC voltage Vi from the rechargeable battery 42 is less than the threshold value Vs2 (S107). In response to the fall of the DC voltage Vi below the threshold value Vs2 (S107: YES), the alarm microcomputer 46 lights the LED451 at regular intervals (S108).

Thus, after the alarm is outputted, when the output duration of the alarm passes (S109: YES) or the AC inlet 60 is connected to the outlet (S110: YES), the alarm microcomputer 46 stops the output of the alarm sound (S111). When the alarm output is stopped by connecting the AC inlet 60 to the outlet (S110: YES to S111), after that, until the AC inlet 60 is removed from the outlet (S101: YES), driving of the LED451 and the buzzer 452 is stopped (S105). On the other hand, when the alarm output is stopped because the duration of the alarm output passes (S109: YES to S111), after that, until the AC inlet 60 is connected to the outlet (S101: NO), processing of after S102 is performed, and as the above, driving of the LED 451 and the buzzer 452 is performed suitably.

It is noted that, in the process flow of FIG. 9, although the alarm output is canceled by the lapse of the alarm output duration (S109) and the connection of the AC inlet 60, the output of the alarm may be canceled by inputting a password. In this case, the password is, for example, entered from the operation buttons part 51 for inputting the alarm operation arranged on the body cabinet.

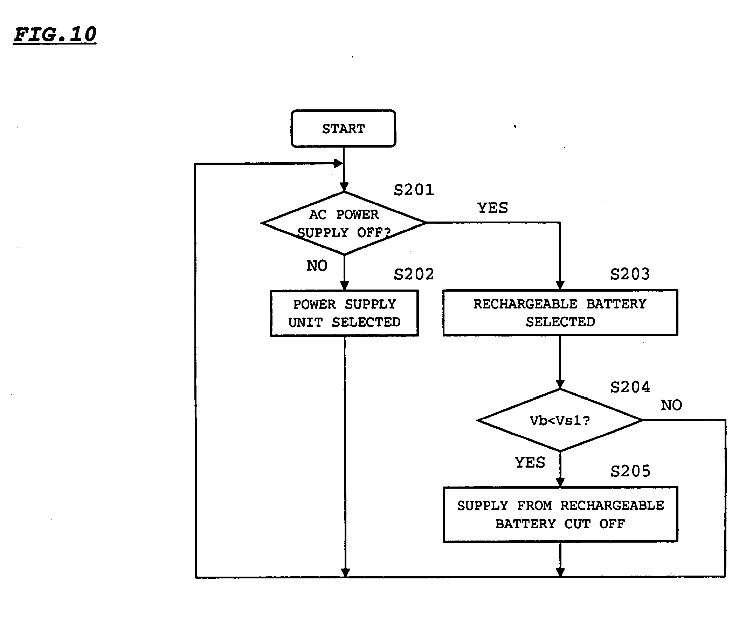

Moreover, the output of the alarm may be continued until the AC inlet 60 is connected to the outlet, even if the alarm output duration elapses. In this case, if the AC inlet 60 is not connected to the outlet, the alarm output is continued until the electric power supply from the rechargeable battery 42 is cut off according to the operation flow of FIG. 10.

Furthermore, in a condition that the rechargeable battery 42 is removed or almost being removed, even if the AC inlet 60 is connected to the outlet and the DC voltage is supplied from the power supply unit 30, the alarm sound may be kept outputting and the alarm output may be prevented from being canceled. In this case, for example, a sensor detects the existence of the rechargeable battery 42, and that detection signal is inputted into the system controller 47. When the system controller 47 judges that the rechargeable battery 42 has been removed based on this detection signal, a signal indicating the situation is supplied to the alarm microcomputer 46. In response to this signal, the alarm microcomputer 46 makes the buzzer circuit 453 drive the buzzer 452. In this case, even if the AC status signal which shows that there is electric power supply of the DC voltage from the power supply unit 30 is inputted from the system controller 47, the alarm microcomputer 46 makes the buzzer 452 continue to drive.

Next, referring to FIG. 10, a supply operation of the DC voltage to the alarm board 45 and the alarm microcomputer 46 is explained.

When the AC inlet 60 is connected to the outlet and the DC voltage is supplied from the power supply unit 30 (S201: NO), the switching circuit 44 supplies the DC voltage inputted from the power supply unit 30 to the alarm board 45 and the alarm microcomputer 46 (S202). On the other hand, when the DC voltage is not inputted from the power supply unit 30 (S201: YES), the switching circuit 44 supplies the DC voltage supplied from the rechargeable battery 42 through the cutoff circuit 43 to the alarm board 45 and the alarm microcomputer 46 instead of the DC voltage inputted from the power supply unit 30 (S203).

While the DC voltage from the rechargeable battery 42 is supplied to the alarm board 45 and the alarm microcomputer 46, if the DC voltage Vb from the rechargeable battery 42 becomes less than the threshold value Vs1 (Vs1<Vs2) (S204: YES), the supply of the DC voltage from the rechargeable battery 42 to the switching circuit 44 will be cut off by the cutoff circuit 43 (S205). Thereby, after that, the electric power consumption of the rechargeable battery 42 by the alarm board 45 and the alarm microcomputer 46 is avoided. Therefore, the situation where the rechargeable battery 42 falls in an overdischarge state is avoided, and degradation and a fall of charging capacity of the rechargeable battery 42 are prevented.

When the AC inlet 60 is connected to the outlet and the electric power supply from the power supply unit 30 is resumed after an appropriate time (S201: NO), the switching circuit 44 supplies the DC voltage inputted from the power supply unit 30 to the alarm board 45 and the alarm microcomputer 46 (S202). Then, when charging of the rechargeable battery 42 progresses and the DC voltage Vb from the rechargeable battery 42 becomes the threshold value Vs1 or more (S204: NO), the DC voltage Vb from the rechargeable battery 42 starts again to be supplied to the switching circuit 44 through the cutoff circuit 43. Therefore, after that, even if the electric power supply from the power supply unit 30 is stopped (S201: YES), the DC voltage Vb from the rechargeable battery 42 starts to be supplied to the alarm board 45 and the alarm microcomputer 46 (S204: NO) .

According to the embodiments mentioned above, while the electric power is supplied from the rechargeable battery 42 to the alarm board 45 and the alarm microcomputer 46, if the DC voltage Vb from the rechargeable battery 42 becomes less than the threshold value Vs1, the supply of the DC voltage from the rechargeable battery 42 will be cut off. Therefore, after the DC voltage Vb becomes less than the threshold value Vs1, the electric power consumption of the rechargeable battery 42 by the alarm board 45 and the alarm microcomputer 46 is avoided. Thus, the situation the rechargeable battery 42 fell into the state of overdischarge can be avoided, with the result that degradation or a situation where charging is incapable that the rechargeable battery 42 is prevented.

Moreover, since the cutoff circuit 43 is arranged between the rechargeable battery 42 and the switching circuit 44 according to the embodiment, when the cutoff circuit 43 operates, the electric power of the rechargeable battery 42 can be prevented from being consumed by the switching circuit 44 besides the alarm board 45 and the alarm microcomputer 46, and the wasteful discharge of the rechargeable battery 42 can be suppressed more effectively.

Thepresent invention is not limited to the above-mentioned embodiments at all, and various alterations are also possible for the embodiments of the present invention in addition to the above embodiments.

For example, in the above-mentioned embodiments, although the cutoff circuit 43 has been arranged between the rechargeable battery 42 and the switching circuit 44, the cutoff circuit 43 may also be arranged in other locations between the rechargeable battery 42 and the alarm microcomputer 46.

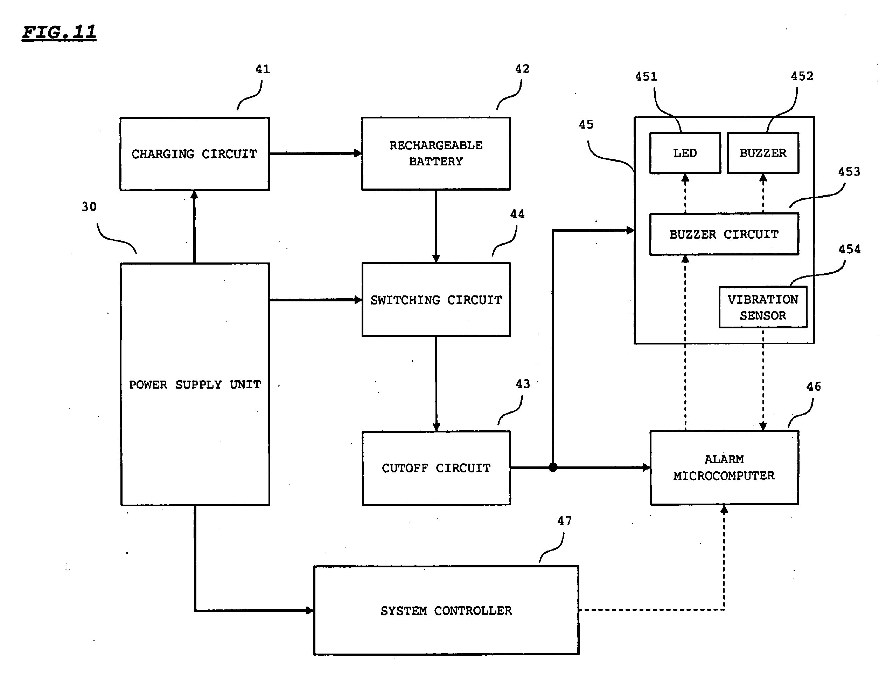

FIG. 11 shows an example of a structure of a case arranging the cutoff circuit 43 just behind the switching circuit 44. Also in this example of the structure, if the DC voltage Vb from the rechargeable battery 42 becomes less than the threshold value Vs1 while the rechargeable battery 42 is in use, the electric power supply to the alarm board 45 and the alarm microcomputer 46 will be cut off by the cutoff circuit 43. Thus, the situation where the rechargeable battery 42 fell into the state of overdischarge can be avoided, and degradation or a situation where charging is incapable for the rechargeable battery 42 is prevented.

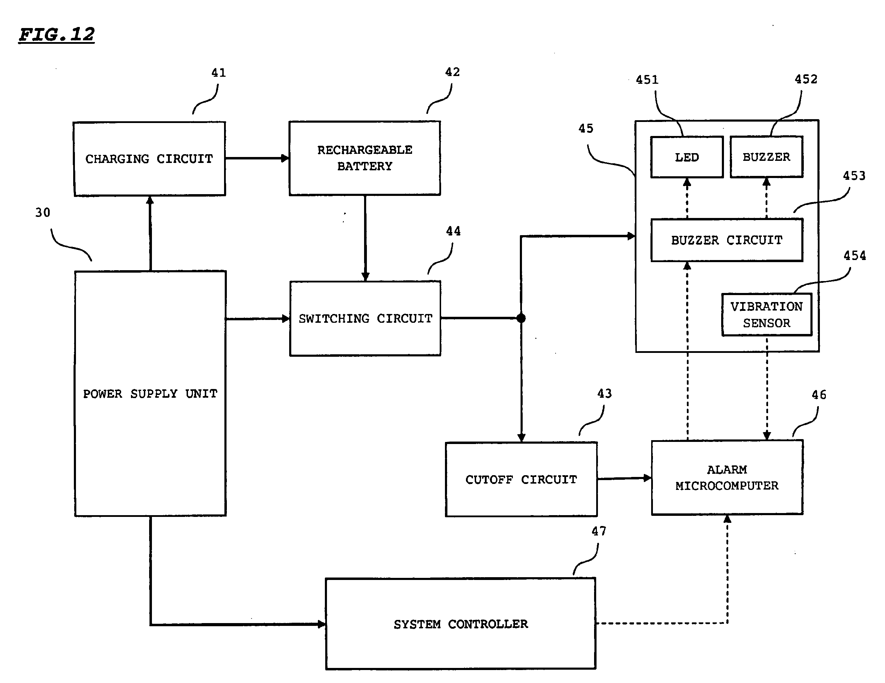

FIG. 12 shows an example of a structure of a case arranging the cutoff circuit 43 just before the alarm microcomputer 46. In this example of the structure, if the DC voltage Vb from the rechargeable battery 42 becomes less than the threshold value Vs1 while the rechargeable battery 42 is in use, the electric power supply to the alarm microcomputer 46 will be cut off by the cutoff circuit 43. In this case, the electric power from the rechargeable battery 42 is connected to the alarm board 45. However, if the DC voltage Vb from the rechargeable battery 42 becomes less than the threshold value Vs1, the electric power supply to the alarm microcomputer 46 is cut off, and the alarm microcomputer 46 will be in a turned off state; therefore, the buzzer circuit 453 will not operate after that. Thus, also in this case, the situation where the rechargeable battery 42 falls into the state of overdischarge can be avoided, and degradation or a situation where charging is incapable for the rechargeable battery 42 is prevented.

In addition, the embodiments of the present invention can be modified in various manners as appropriate, within the scope of technical ideas defined by the claims.

## Claims

1. A projection display device, comprising:
a power supply part (30) which supplies electric power from an external power supply;
a charging part (41) which charges a rechargeable battery with the power supply part;
an alarm part (452) for outputting an alarm sound;
a switching part (44) which supplies either one of the electric power from the power supply part (30) or an electric power from the rechargeable battery (42) to the alarm part; **characterized by** further comprising:
a cutoff part (43) which cuts off a supply of the electric power from the rechargeable battery (42) to the alarm part when a charge quantity of the rechargeable battery becomes less than a threshold value, wherein
the threshold value is set at a lower limit value of a voltage range where the alarm part can operate normally.

2. The projection display device according to Claim 1, wherein
the cutoff part (43) is arranged between the rechargeable battery (42) and the switching part (44).

3. The projection display device according to any one of Claims 1 or 2,
wherein
the alarm part has a distinguish part (454) for distinguishing whether the projection display device is moved, and outputs the alarm sound when an electric power from the rechargeable battery (42) is supplied to the alarm part by the switching part, and when the distinguish part determines that the projection display device is moved.

## Patentansprüche

1. Projektionsanzeigevorrichtung mit:
einem Spannungsversorgungsteil (30), der elektrische Leistung von einer externen Spannungsversorgung liefert,
einem Ladeteil (41), der eine wiederaufladbare Batterie mit dem Spannungsversorgungsteil lädt,
einem Alarmteil (452) zum Ausgeben eines Alarmtons,
einem Schaltteil (44), der entweder elektrische Leistung von dem Spannungsversorgungsteil (30) oder elektrische Leistung von der wiederaufladbaren Batterie (42) an den Alarmteil liefert, **gekennzeichnet durch** ferner:
einem Unterbrechungsteil (43), der die Zufuhr elektrischer Leistung von der wiederaufladbaren Batterie (42) an den Alarmteil unterbricht, wenn eine Ladungsmenge der wiederaufladbaren Batterie geringer als ein Schwellwert wird, wobei
der Schwellwert auf einem unteren Grenzwert eines Spannungsbereichs eingestellt ist, in dem der Alarmteil normal arbeiten kann.

2. Projektionsanzeigevorrichtung nach Anspruch 1, wobei der Unterbrechungsteil (43) zwischen der wiederaufladbaren Batterie (42) und dem Schaltteil (44) angeordnet ist.

3. Projektionsanzeigevorrichtung nach einem der Ansprüche 1 oder 2, wobei der Alarmteil einen Unterscheidungsteil (454) aufweist zum Unterscheiden, ob die Projektionsanzeigevorrichtung bewegt wird und einen Alarmton ausgibt, wenn eine elektrische Leistung von der wiederaufladbaren Batterie (42) an den Alarmteil durch den Schaltteil geliefert wird und wenn der Unterscheidungsteil bestimmt, dass die Projektionsanzeigevorrichtung bewegt wird.

## Revendications

1. Dispositif d'affichage de projection, comprenant :
une pièce d'alimentation électrique (30) qui fournit de l'énergie électrique à partir d'une alimentation électrique externe ;
une pièce de charge (41) qui charge une batterie rechargeable avec la pièce d'alimentation électrique ;
une pièce d'alarme (452) pour produire une alarme sonore ;
une pièce de commutation (44) qui fournit l'une ou l'autre parmi l'énergie électrique issue de la pièce d'alimentation électrique (30) ou une énergie électrique issue de la batterie rechargeable (42) à la pièce d'alarme ; **caractérisé en ce qu'**il comprend en outre :
une pièce de coupure (43) qui coupe une alimentation de l'énergie électrique issue de la batterie rechargeable (42) vers la pièce d'alarme lorsqu'une quantité de charge de la batterie rechargeable devient inférieure à une valeur de seuil, dans lequel
la valeur de seuil est fixée à une valeur limite inférieure d'une plage de tension sur laquelle la pièce d'alarme peut fonctionner normalement.

2. Dispositif d'affichage de projection selon la revendication 1, dans lequel
la pièce de coupure (43) est disposée entre la batterie rechargeable (42) et la pièce de commutation (44).

3. Dispositif d'affichage de projection selon l'une quelconque des revendications 1 ou 2, dans lequel
la pièce d'alarme possède une pièce de distinction (454) permettant de distinguer si le dispositif d'affichage de projection est déplacé, et produit l'alarme sonore lorsqu'une énergie électrique issue de la batterie rechargeable (42) est fournie à la pièce d'alarme par la pièce de commutation, et lorsque la pièce de distinction détermine que le dispositif d'affichage de projection est déplacé.
